# EUROPEAN PATENT APPLICATION

(11) **EP 4 722 939 A1**
(43) Date of publication of application: **08.04.2026**
(21) Application number: 24830650.8
(22) Date of filing: 21.06.2024
(51) Int. Cl.: G06F 16/22

(54) **METHOD AND APPARATUS FOR DETERMINING REMOTE INDEX NODE, DEVICE, AND MEDIUM**

(30) Priority: 29.06.2023 CN 202310785150
(71) Applicant: ZTE CORPORATION, Shenzhen, Guangdong 518057 (CN)
(72) Inventor: WEI, Xing, Shenzhen, Guangdong 518057 (CN); TU, Yaofeng, Shenzhen, Guangdong 518057 (CN); HAN, Yinjun, Shenzhen, Guangdong 518057 (CN); JIN, Hao, Shenzhen, Guangdong 518057 (CN); CHEN, Zhenghua, Shenzhen, Guangdong 518057 (CN)
(74) Representative: Ziebig Hengelhaupt Intellectual Property Attorneys Patentanwaltskanzlei PartGmbB
(86) International application number: PCT/CN2024/100702
(87) International publication number: WO 2025/002005

(57) **Abstract**

The present application discloses a method, apparatus, device for determining a remote index node, and a medium, belonging to the technical field of distributed storage. A range index cache is constructed for a compute node in a distributed architecture, and the cached index node is constructed in the range index cache. A target cached node covering a range of the determination request of the remote index node is determined by searching, and the remote index node in the storage nodes are determined according to the target cached node.

## Description

### CROSS-REFERENCE TO RELATED APPLICATIONS

The present application claims priority to Chinese Patent Application No. 202310785150.7, filed on June 29, 2023, the entire contents of which are incorporated herein by reference.

### TECHNICAL FIELD

The present application relates to the field of distributed storage, and in particular to a method, an apparatus and a device for determining a remote index node, and a computer-readable storage medium.

### BACKGROUND

Currently, with the rise of cloud services, more and more database and storage systems are being deployed in distributed environments to achieve performance improvements. In this architecture, some servers serve as compute nodes, primarily responsible for performing computational tasks during system operation; others serve as storage nodes, primarily responsible for storing data and its corresponding range index structure. When a compute node needs to read target data, it uses a high-performance network to recursively access each level of the index structure within the storage node until the target data is retrieved. This access process involves a significant amount of network transmission, which can easily lead to decreased data access performance.

### SUMMARY

The present application provides a method for determining a remote index node, applied to a compute node. The method includes: in response to a determination request from the remote index node, searching cached index nodes to determine whether there is a target cached node covering a range of the determination request; and after determining that there is the target cached node covering the range of the determination request, determining the remote index node in storage nodes according to the target cached node, where the remote index node is an index node in index node layers of the storage nodes located above a leaf node layer.

The present application further provides an apparatus for determining a remote index node, applied to a compute node. The apparatus includes: a retrieval module configured to, in response to a determination request from the remote index node, search cached index nodes to determine whether there is a target cached node covering a range of the determination request; and a determination module configured to, after determining that there is the target cached node covering the range of the determination request, determine the remote index node in storage nodes according to the target cached node, where the remote index node is an index node in an index node layer of the storage nodes located above a leaf node layer.

The present application further provides a device for determining a remote index node, including: a memory, a processor, and a computer program stored in the memory and executable on the processor, and the computer program is configured to implement the method for determining the remote index node as described above.

The present application further provides a computer-readable storage medium, a computer program is stored on the computer-readable storage medium, and when the computer program is executed by a processor, the method for determining the remote index node as described above is implemented.

### BRIEF DESCRIPTION OF THE DRAWINGS

FIG. 1 is a schematic structural diagram of an operating device of a hardware operating environment involved in an embodiment of the present application.
FIG. 2 is a schematic diagram of a typical range index.
FIG. 3 is a schematic diagram of an application environment of a system for determining a remote index node according to an embodiment of the present application.
FIG. 4 is a block diagram of the system for determining the remote index node according to an embodiment of the present application.
FIG. 5 is a flow chart of the system for determining the remote index node according to an embodiment of the present application.
FIG. 6 is a schematic diagram of a range search of the system for determining the remote index node according to an embodiment of the present application.
FIG. 7 is a schematic diagram of popularity management of the system for determining the remote index node according to an embodiment of the present application.
FIG. 8 is an example diagram of the range search and the popularity update of the system for determining the remote index node according to an embodiment of the present application.
FIG. 9 is a schematic diagram of an apparatus for determining the remote index node according to an embodiment of the present application.

The realization of the objectives, functional features and advantages of the present application will be further explained in conjunction with embodiments and with reference to the accompanying drawings.

### DETAILED DESCRIPTION OF THE EMBODIMENTS

It should be understood that the specific embodiments described herein are only intended to illustrate the present application and are not intended to limit the present application.

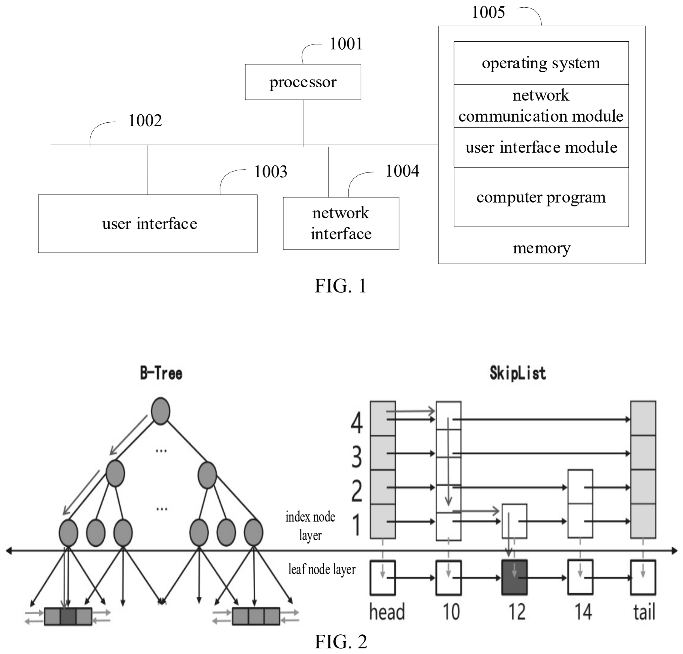

Referring to FIG. 1, FIG. 1 is a schematic structural diagram of the operating device of the hardware operating environment involved in the embodiments of the present application.

As shown in FIG. 1, the operating device may include a processor 1001 such as a central processing unit (CPU), a communication bus 1002, a user interface 1003, a network interface 1004 and memory 1005. The communication bus 1002 is used to implement the connection and communication between these components. The user interface 1003 may include a display and an input unit, such as a keyboard. The user interface 1003 may also include a standard wired interface or a wireless interface. The network interface 1004 may include a standard wired interface or a wireless interface (such as a wireless fidelity (WI-FI) interface). The memory 1005 may be a high-speed random access memory (RAM) or a stable non-volatile memory (NVM), such as a disk. The memory 1005 may also be a storage device independent of the processor 1001.

Those skilled in the art will appreciate that the structure shown in FIG. 1 does not constitute a limitation on the operating device, and may include more or fewer components than shown in the figure, or combinations of certain components or differently arranged components.

As shown in FIG. 1, the memory 1005 as a storage medium may include an operating system, a data storage module, a network communication module, a user interface module and a computer program.

In the operating device shown in FIG. 1, the network interface 1004 is mainly used for data communication with other devices, the user interface 1003 is mainly used for data interaction with the user, and the processor 1001 and the memory 1005 in the operating device of the present application can be provided in the operating device. The operating device calls the computer program stored in the memory 1005 through the processor 1001 and performs the following operations: in response to a determination request from a remote index node, searching cached index nodes to determine whether there is a target cached node covering a range of the determination request; and after determining that there is the target cached node covering the range of the determination request, determining the remote index node in the storage node according to the target cached node. The remote index node is an index node in the index node layer of the storage nodes located above a leaf node layer.

In an embodiment, the processor 1001 can call the computer program stored in the memory 1005 and perform the following operations: based on an initial value in the range index cache structure, searching the cached index nodes to determine whether there is a target cached node covering the range of the determination request. The range index cache structure is obtained by organizing the initial values of the cached index nodes.

In an embodiment, the processor 1001 can call the computer program stored in the memory 1005 and also perform the following operations: after determining that the initial value of the target cached node is different from the initial value of the remote index node, updating the initial value of the target cached node to the initial value of the remote index node.

In an embodiment, the processor 1001 can call the computer program stored in the memory 1005 and also perform the following operations: after determining that the node initial value of the target cached node is the same as the node initial value of the remote index node, accessing and reading the storage data corresponding to the actual storage address of the remote index node from the leaf node layer of the storage node.

In an embodiment, the processor 1001 can call the computer program stored in the memory 1005 and also perform the following operations: counting the access frequency of the remote index node; and determining the remote index node with the access frequency greater than a preset frequency threshold as a new cached index node.

In an embodiment, the processor 1001 can call the computer program stored in the memory 1005 and also perform the following operations:

after determining the new cached index node, sorting the new cached index nodes in the existing hot-spot node linked list based on the access frequency to obtain a new hot-spot node linked list, and obtaining a new range index cached structure by organizing the initial values of the cached index nodes in the new hot-spot node linked list.

In an embodiment, the processor 1001 can call the computer program stored in the memory 1005 and also perform the following operations:

after determining that a storage space of the range index cache structure of the cached index node is greater than a preset space threshold, deleting the cached index node at the tail of the hot-spot node linked list until the storage space is less than or equal to the preset space threshold.

As shown in FIG. 2, an index is one of essential structures in data management systems (e.g., database systems and storage systems) and is the most common means to support high-performance queries. Common index structures can be divided as key-value indexes (e.g., HashTable) and range indexes, such as B-Tree and SkipList in FIG. 2. In the key-value index, the corresponding target value can be quickly found based on the input key value. In the range index, a set of target value storage locations that meet the conditions can be quickly found based on a pair of input range key values ([Key1, Key2]). As shown in FIG. 2, the range index structure can be divided into two parts: the index node layer and the leaf node layer. Essentially, the index node layer of a range index can be viewed as a regression tree model, which ensures that the input key value range is mapped to one or more leaf nodes with bounded error. The corresponding target value is then read from storage using the address information in the leaf node.

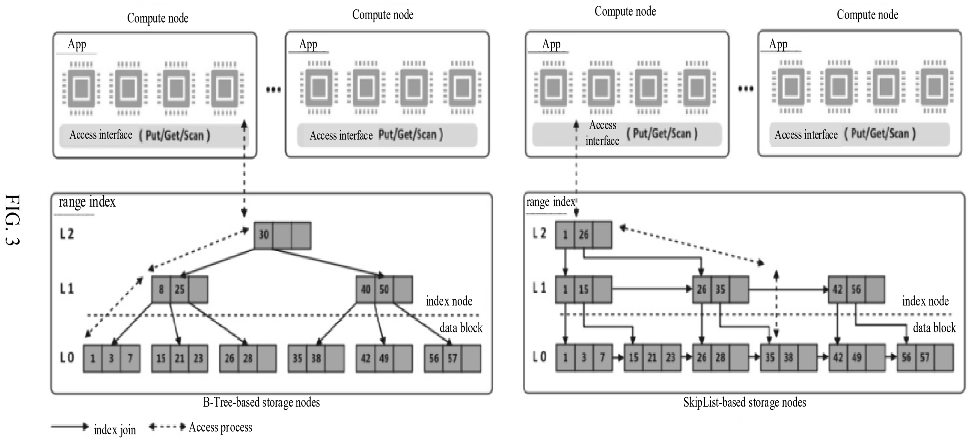

Referring to FIG. 3, the popularity-aware range index caching solution of the present application is deployed in a typical distributed environment. The servers in the distributed environment can be divided into two categories, which can be compute nodes and storage nodes, respectively. The two are connected to each other through high-performance networks, such as remote direct memory access (RDMA) and compute express link (CXL). Each compute node provides a system interface (e.g., Put, Get, and Scan) to help applications obtain data from remote storage nodes. The storage nodes are primarily responsible for storing various data blocks and constructing range indexes based on these data blocks (for example, the B-Tree or SkipList in FIG. 2), thereby helping compute nodes quickly locate target data. Therefore, when a client of the compute node needs to access a specific data block in the storage node, it needs to access the index structure in the storage node multiple times from top to bottom (the minimum number of times is the index structure layer height) until the target data block is returned. Taking FIG. 3 as an example, when facing a storage node based on a B-Tree index, searching for data <1> requires first accessing the remote L2 root node <30>, then accessing the left child node <8,25> of the L1 root node <30>, and finally searching the L0 left child node database <1,3,7> to find the corresponding data <1>. Similarly, when facing the storage node based on a SkipList index, the compute node also needs to access multiple layers of index nodes. The specific process is not detailed here. This shows that in the existing distributed environment, access to target data requires multiple remote communications, resulting in high overall access latency.

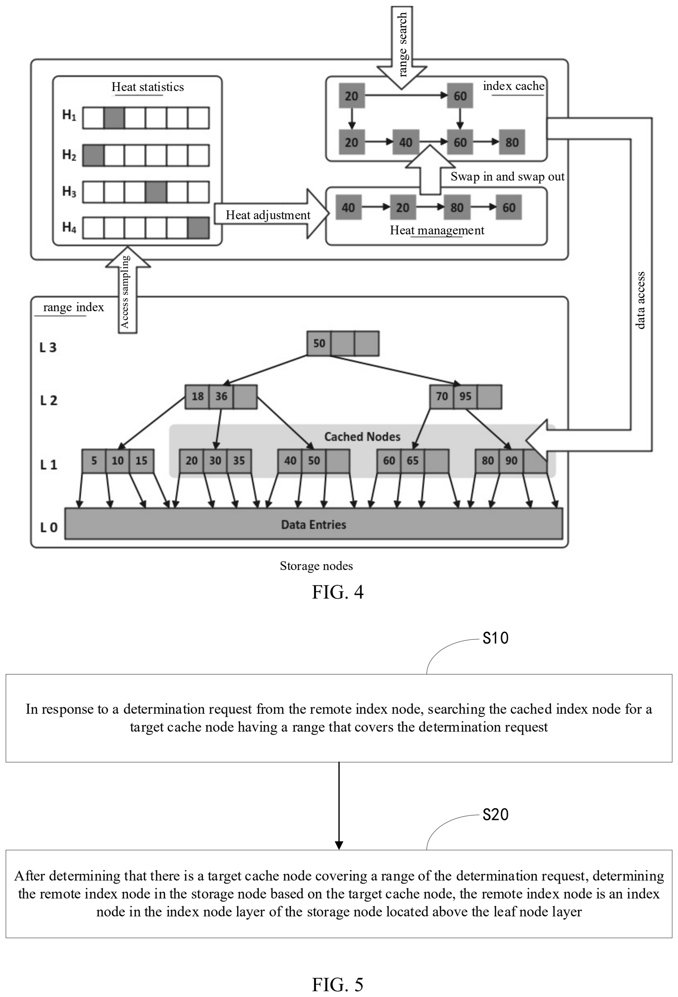

To address the performance issues of accessing range indexes in storage nodes under a distributed architecture, the present application proposes a popularity-aware range index caching solution. Referring to FIG. 4, an index caching module, a popularity statistics module and a popularity management module are used to cache the range index in the remote storage node, simultaneously meeting the requirements of hot-spot tracking, range search and data consistency. This effectively reduces the number of index accesses when the compute node queries the remote storage node, thereby improving data access performance.

First, the index cache module is configured to be introduced within the compute node to temporarily store frequently accessed hot-spot nodes in the L1 layer (the lowest level of the index node layer) of the range index in the storage node (for example, L1layer nodes <20,30,35>, <40,50>, <60,65> and <80,90> in FIG. 4). It is worth noting that the index nodes in the cache only need to record the starting value and actual storage address of the node (for example, <20>, <40>, <60> and <80> in the index cache in FIG. 4). Access to any cache node still requires reading the actual remote data based on the actual storage address. If the read starting value of the remote index node does not match the starting value in the cache, it proves that the cache node is invalid (i.e., a split or update has occurred) and needs to be updated immediately. Then, in the next retrieval after the update, the remote index node is read again based on the cached index node with the updated starting value. In addition, the module organizes the cached index nodes according to their starting values to form a specific range index structure (for example, SkipList or B-Tree), thereby reducing remote access while meeting range search requirements. In this way, it is only necessary to directly access the hot-spot node of the L1 layer of the storage node from the index cache of the compute node according to the starting value of the cached index node, without the need to traverse from L3 to L2 to L1. Furthermore, the subsequent popularity statistics module and the popularity management module both serve the index cache module, specifically for its swap-in and swap-out operations.

Inside the compute node, a Count-Min Sketch is also used to construct a heat statistics module, to count the access frequency of the L1 layer index node in real time. This counted access includes the cached index node hits, the cached index node misses, and accesses to L1 layer index nodes. When the access frequency (heat) of a certain index node reaches a set threshold, it is considered a hot-spot index node and should be reported to the index cache module for organization and management. For example, in FIG. 4, L1 index nodes <20,30,35>, <40,50>, <60,65> and <80,90> are selected as hot-spot index nodes and require cache management on the compute nodes, while L1 index nodes <5,10,15> do not require cache management.

Finally, the heat management module is configured to be further introduced inside the compute node to record the heat changes of the cached index node. In essence, the heat management module is a one-way linked list, each node of which corresponds to a cached index node. The linked list represents the heat from high to low from the beginning to the end. For example, four cached index nodes in FIG. 4 are sorted from left to right according to the heat level. When faced with the heat index node reported by the sample, the existing index node is moved to the head of the linked list, and the new node is inserted into the head of the linked list before being inserted into the index module. When the cache space is insufficient, the cached index node corresponding to the tail of the linked list will be deleted. Based on the cooperation of the statistical module and the heat module, this cache solution meets the heat tracking needs. Considering that the cost of complete real-time sorting is too high, approximate sorting can be used, roughly sorting according to the heat level. In this way, based on the heat of the nodes in the one-way linked list, the cache nodes in the index structure of the index cache module are managed, that is, the cache nodes in the index structure are added and deleted by swapping in and out as shown in FIG. 2.

In the above, by building a range index cache for the compute nodes in the distributed architecture, the overhead of accessing the range index in the remote storage nodes is reduced, thereby improving the overall data access performance. In order to implement the range index cache, (1) hot-spot tracking: the compute nodes have limited memory space and can only cache some hot-spot index nodes. In response to constantly changing access loads, the present application tracks the hot-spot nodes in the range index in real time, caches the hot-spot index data in a timely manner, and removes the cool index data. (2) Range search: to ensure that the cached index nodes can still support range search, the present application organizes them according to specific range search data structures (e.g., B-Tree and SkipList). (3) Consistency guarantee: the range indexes often change as data is updated. To promptly detect changes in range indexes in the storage nodes, the present application adopts a cache address strategy to ensure that the cache in the compute node is consistent with the storage node, thereby avoiding reading incorrect data from the cache.

An embodiment of the present application provides a method for determining the remote index node. Referring to FIG. 5, in an embodiment of the method for determining the remote index node, the method is applied to the compute node, and the method includes: step S10, in response to a determination request from the remote index node, searching the cached index node for a target cached node covering a range of the determination request.

The method for determining the remote index node in the present application is applicable to a scenario where computing and storage are separated and memory is decoupled in the distributed architecture, and is also applicable to a scenario where virtualization and easy access to cloud storage are required.

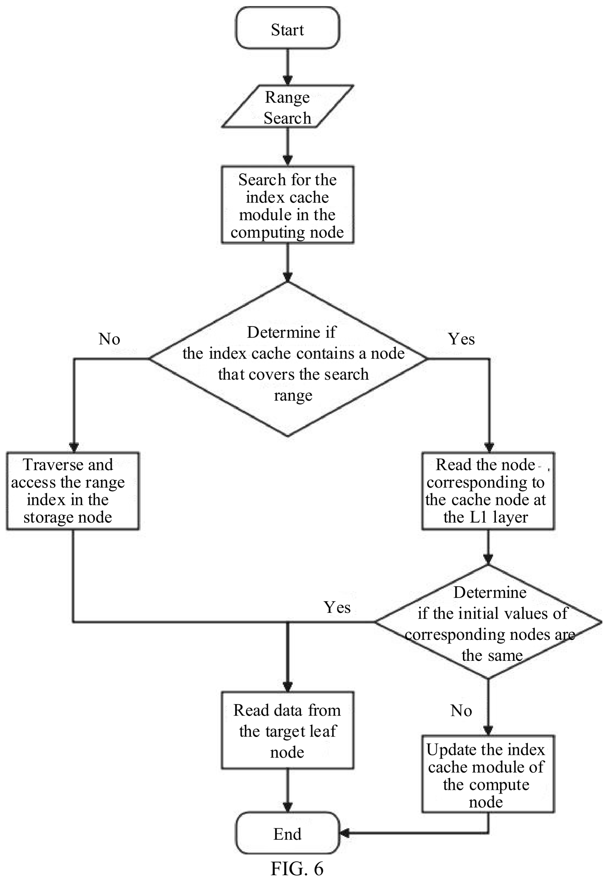

Referring to FIG. 6, to avoid frequent access to the index structure in the remote storage node, this embodiment introduces interaction with the index cache module within the existing range search process. When receiving a range search request, the compute node first searches the index cache module to find a cached index node from the corresponding range index cache structure (SkipList or B-Tree) that can cover the requested range of the remote index node.

Step S20, after determining that there is a target cached node covering the range of the determination request, determining the remote index node in the storage node based on the target cached node, the remote index node is an index node in the index node layer of the storage node located above the leaf node layer.

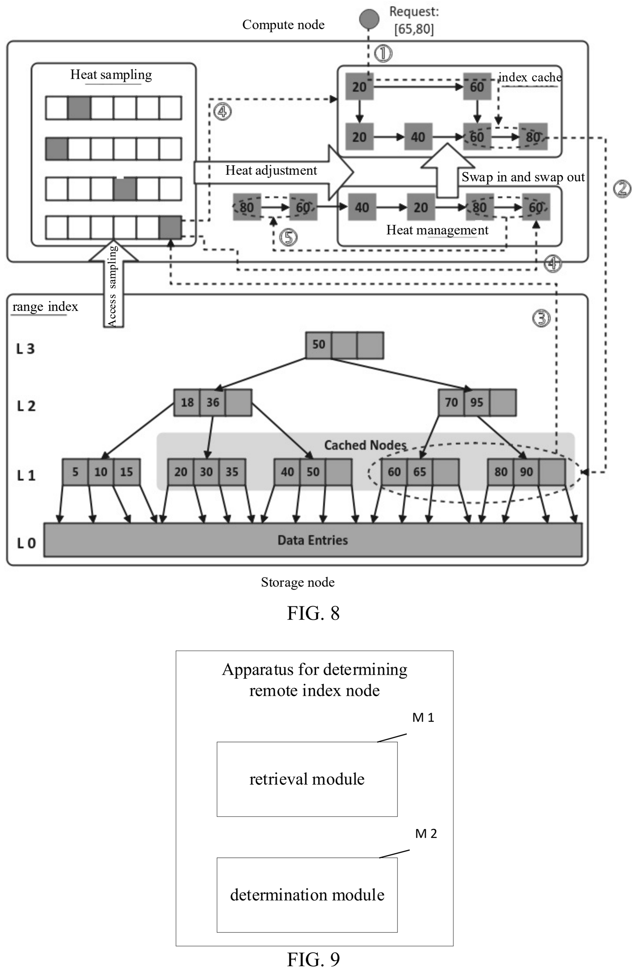

If the index cache module provides cached index nodes that meet the range search criteria, the compute node will sequentially read all L1 remote index nodes that meet the criteria from the storage node based on their corresponding locations. If no cached index node meets the range criteria, the compute node will choose to directly traverse and access the range index of the storage node according to the original process. In an embodiment, as shown in FIG. 8, when the compute node receives a search request for the range [65, 80], it directly searches the Skiplist in the index cache module and obtains the cached index nodes 60 and 80.

In an embodiment, the step of searching in the cached index node whether there is a target cached node covering the range of the determination request includes: based on the initial value in the range index cache structure, searching in the cached index node whether there is a target cached node covering the range of the determination request, the range index cache structure is obtained by organizing the initial value of the cached index node.

In an embodiment, cached index nodes are organized according to their starting values to form a specific range index structure (e.g., SkipList or B-Tree). Based on the starting value of the node in the range index cache structure, the cached index nodes are searched to see whether there is a target cached node covering the range of the determination request from the remote index node. This reduces remote accesses while satisfying range search requirements. Therefore, it only requires accessing the hot-spot nodes in the L1 layer of the storage node directly from the index cache of the compute node, based on the starting value of the cached index node, without needing to traverse from L3 to L2 to L1.

In an embodiment, determining the remote index node in the storage node based on the target cached node includes: after determining that the initial value of the target cached node and the initial value of the remote index node are different, updating the initial value of the target cached node to the initial value of the remote index node.

Referring to FIG. 6, if the read index node and the cached index node have different starting values, it means that the corresponding index node in the storage node has been split or merged, the cached index node is invalid, and should be updated to the latest read value before restarting the query process. Otherwise, it is assumed that the correct L1 layer index node has been read, and the corresponding L0 layer data is then read.

In an embodiment, determining the remote index node in the storage node based on the target cached node includes: after determining that the node initial value of the target cached node is the same as the node initial value of the remote index node, accessing and reading the storage data corresponding to the actual storage address of the remote index node from a leaf node layer of the storage node.

After determining that the node initial values of the target cached node and the remote index node are the same, the storage data corresponding to the actual storage address of the remote index node can be read from the leaf node layer L0 of the storage node.

In this embodiment, the method is applied to the compute node, and in response to the determination request from the remote index node, searching is performed in the cached index node whether there is a target cached node covering the range of the determination request; after determining that there is a target cached node covering the range of the determination request, the remote index node in the storage node is determined based on the target cached node, the remote index node is an index node in the index node layer of the storage node located above the leaf node layer.

In this embodiment, a range index cache is constructed for compute nodes in the distributed architecture, and cached index nodes are constructed in the range index cache. The target cached node is determined by searching that covers a range of the determination request from the remote index node, and the remote index node in the storage node is determined based on the target cached node. The remote index node is an index node in an index node layer of the storage node located above a leaf node layer, i.e., the remote index node is the lowest index node in the index node layer of the storage node.

As a result, instead of recursively accessing each layer of the index structure in the storage node until the target data is retrieved, it is only necessary to retrieve the target cached node in the range index cache that covers the range of the determination request from the remote index node. The remote index node in the storage node can then be directly determined based on the target cached node to obtain the target data. This reduces the overhead of accessing the range index in the remote storage node, thereby improving overall data access performance.

In another embodiment of the method for determining the remote index node of the present application, the method further includes: counting the access frequency of the remote index node; and determining the remote index node with the access frequency greater than a preset frequency threshold as a new cached index node.

The compute node also uses a Count-Min Sketch to build a heat statistics module, which counts the frequency of L1 index node accesses in real time. This includes cached index node hits, cached index node misses, and access to L1 index node. When the access frequency (heat) of a certain index node reaches a set threshold, it is considered a cached index node (hot-spot index node) and is reported to the index cache module for organization and management.

In one embodiment, the method further includes: after determining the new cached index node, sorting the new cached index node in the existing hot-spot node linked list based on the access frequency to obtain a new hot-spot node linked list, and organizing the new range index cache structure based on the initial value of the cached index node in the new hot-spot node linked list.

A heat management module is further introduced inside the compute node to record the heat changes of the cached index nodes. In essence, the heat management module is a one-way linked list, where each node corresponds to a cached index node, and the linked list represents the heat from high to low from head to tail. For example, the four cached index nodes in FIG. 4 are sorted from left to right according to the heat level. When faced with the heat index node reported by the sampling, the existing index node will be moved to the head of the linked list, and the new node will be inserted into the head of the linked list and then inserted into the index module. In this way, the new range index cache structure can be further organized according to the initial value of the cached index node in the new hot-spot node linked list.

In an embodiment, the method further includes: after determining that the storage space of the range index cache structure of the cached index node is greater than a preset space threshold, deleting the cached index node at the tail of the linked list of the hot-spot nodes until the storage space is less than or equal to the preset space threshold.

When cache space is insufficient, the cached index node corresponding to the tail of the linked list will be deleted. This caching solution, based on the collaboration between the statistics module and the popularity module, meets the need for popularity tracking. Thus, the cache nodes in the index structure of the index cache module are managed based on the heat of the nodes in the one-way linked list, that is, the addition and deletion of cache nodes in the index structure are achieved through swapping in and out as shown in FIG. 2.

This embodiment proposes a cache management method for range indexes in a distributed system, which requires that when caching all nodes, hot-spot nodes in the range index can be cached in real time based on changes in index access popularity.

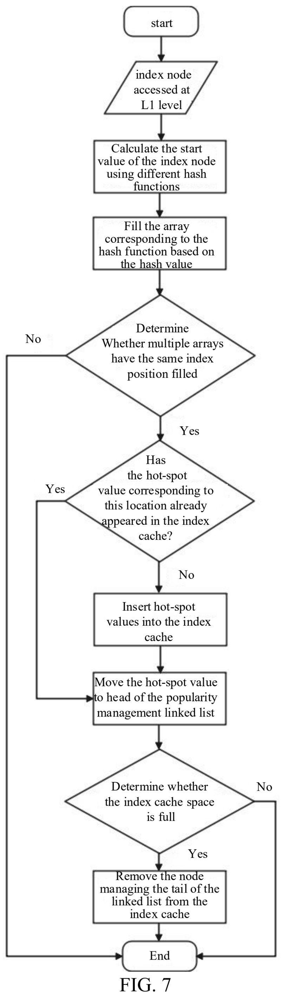

Referring to FIG. 7, to cache the hot-spot index node in real time, heat sampling and heat management are required after the range search process. After successfully reading data from the storage node, its corresponding L1 index node is accessed and sampled. This module randomly selects a subset of index nodes and calculates their minimum value using multiple hash functions in the Count-Min Sketch (e.g., H1, H2, H3, and H4 in FIG. 4). The minimum value is then filled into the corresponding array index position in the Count-Min Sketch. When a certain index of all arrays in the Count-Min Sketch is filled, the index node corresponding to the index is considered to be a hot spot, which should be reported to the heat management module and the index cache module. If the heat management and index cache modules do not contain the node, it should be inserted. It is worth noting that the heat management module also needs to move the reported hot spot to the head of the linked list. For example, in FIG. 8, the L1 layer index nodes 60 and 80 are moved to the head of the linked list after being accessed. Finally, if the index cache module does not have enough space, the heat management module will continue to report the index node with the lowest current heat (i.e., the tail of the linked list) to the index cache module, allowing the index cache module to delete the node until the space threshold is met.

Thus, a caching mechanism is introduced into the existing method for determining the remote index node in the distributed architecture, thereby reducing the number of remote accesses during index lookups and enabling the cache to be updated in real time according to changes in access load.

Referring to FIG. 9, another embodiment of the present application also provides a apparatus for determining the remote index node. The apparatus includes: a retrieval module M1, configured to, in response to a determination request from the remote index node, search in the cached index node to determine whether there is a target cached node covering the range of the determination request; and a determination module M2, configured to determine a remote index node in the storage node based on the target cached node after determining that there is a target cached node covering the range of the determination request. The remote index node is an index node in the index node layer of the storage node located above the leaf node layer.

In an embodiment, the retrieval module is further configured to: search the cached index node whether there is a target cached node covering the range of the determination request based on the initial value in the range index cache structure. The range index cache structure is obtained by organizing based on the initial value of the cached index node.

In an embodiment, the determination module is further configured to: after determining that the initial value of the target cached node is different from the initial value of the remote index node, update the initial value of the target cached node to the initial value of the remote index node.

In an embodiment, the determination module is further configured to: after determining that the initial value of the target cached node is the same as the initial value of the remote index node, access and read the storage data corresponding to the actual storage address of the remote index node from the leaf node layer of the storage node.

In an embodiment, the apparatus for determining the remote index node further includes a statistics module, and the statistics module is configured to: count the access frequency of the remote index node; and determine the remote index node with the access frequency greater than a preset frequency threshold as the new cached index node.

In an embodiment, the apparatus for determining the remote index node further includes a sorting module, and the sorting module is configured to: after determining the new cached index node, sort the new cached index nodes in the existing hot-spot node linked list based on the access frequencies to obtain a new hot-spot node linked list, and obtain the new range index cache structure by organizing based on the starting values of the cached index nodes in the new hot-spot node linked list.

In an embodiment, the apparatus for determining the remote index node also includes a deletion module, and the deletion module is configured to: after determining that the storage space of the range index cache structure of the cached index node is greater than a preset space threshold, delete the cached index node at the tail of the linked list of the hot-spot nodes until the storage space is less than or equal to the preset space threshold.

The apparatus for determining the remote index node provided in the present application adopts the method for determining the remote index node in the above embodiments to address the technical issue of poor performance in accessing the range index of the storage node in current distributed architectures. Compared to some situations, the beneficial effects of the apparatus for determining the remote index node according to the embodiments of the present application are the same as those of the method for determining the remote index node according to the above embodiments, and other technical features of the apparatus for determining the remote index node are the same as those disclosed in the above embodiment method, which are not be repeated here.

Furthermore, embodiments of the present application also provide a device for determining the remote index node. The device for determining the remote index node includes: a memory, a processor, and a computer program stored in the memory and executable on the processor. When the computer program is executed by the processor, the method for determining the remote index node described above is implemented.

In addition, embodiments of the present application also provide a computer-readable storage medium on which the computer program is stored. When the computer program is executed by the processor, the method for determining the remote index node described above is implemented.

It should be noted that, in this document, the terms "comprise" "include" or any other variations thereof are intended to encompass non-exclusive inclusion, such that a process, method, article, or system including a series of elements includes not only those elements but also other elements not explicitly listed, or elements inherent to such process, method, article, or system. In the absence of further limitations, an element defined by the phrase "includes a ..." does not exclude the presence of other identical elements in the process, method, article, or system including the element.

Through the description of the above embodiments, those skilled in the art can clearly understand that the above-mentioned embodiment methods can be implemented by means of software plus the necessary general hardware platform, and of course can also be implemented by hardware, but in many cases the former is better. Based on this understanding, the technical solution of the present application is essentially, or the part that contributes to some technologies, can be embodied in the form of a software product. This computer software product is stored in a storage medium (such as ROM/RAM, magnetic disk, optical disk) as described above, and includes several instructions to cause a terminal device (which can be a mobile phone, computer, server, or network device, etc.) to execute the methods described in each embodiment of the present application.

The above are some embodiments of the present application and do not limit the scope of the present application. Any equivalent structure or equivalent process transformation made using the contents of the specification and drawings of the present application, or directly or indirectly applied in other related technical fields, are also included in the scope of the present application.

## Claims

1. A method for determining a remote index node, applied to a compute node, the method **characterized by** comprising:
in response to a determination request from the remote index node, searching cached index nodes to determine whether there is a target cached node covering a range of the determination request; and
after determining that there is the target cached node covering the range of the determination request, determining the remote index node in storage nodes according to the target cached node, wherein the remote index node is an index node in index node layers of the storage nodes located above a leaf node layer.

2. The method for determining the remote index node according to claim 1, wherein searching the cached index nodes to determine whether there is the target cached node covering the range of the determination request comprises:
based on a node initial value in a range index cache structure, searching the cached index nodes to determine whether there is a target cached node having the range that covers the determination request, wherein the range index cache structure is obtained by organizing initial values of the cached index nodes.

3. The method for determining the remote index node according to claim 1, wherein determining the remote index node in the storage nodes according to the target cached node comprises:
after determining that an initial value of the target cached node is different from an initial value of the remote index node, updating the initial value of the target cached node to the initial value of the remote index node.

4. The method for determining the remote index node according to claim 1, wherein determining the remote index node in the storage nodes according to the target cached node comprises:
after determining that an initial value of the target cached node is the same as an initial value of the remote index node, accessing and reading storage data corresponding to an actual storage address of the remote index node from leaf node layers of the storage nodes.

5. The method for determining the remote index node according to claim 2, further comprising:
counting an access frequency of the remote index node; and
determining the remote index node with the access frequency greater than a preset frequency threshold as a new cached index node.

6. The method for determining the remote index node according to claim 5, further comprising:
after determining the new cached index node, sorting the new cached index node in an existing hot-spot node linked list based on the access frequency to obtain a new hot-spot node linked list, and organizing the initial values of the cached index nodes in the new hot-spot node linked list to obtain a new range index cache structure.

7. The method for determining the remote index node according to claim 6, further comprising:
after determining that a storage space of a range index cache structure of the cached index node is greater than a preset space threshold, deleting the cached index node at a tail of a linked list of the hot-spot nodes until the storage space is less than or equal to the preset space threshold.

8. An apparatus for determining a remote index node, applied to a compute node, the apparatus **characterized by** comprising:
a retrieval module configured to, in response to a determination request from the remote index node, search cached index nodes to determine whether there is a target cached node covering a range of the determination request; and
a determination module configured to, after determining that there is the target cached node covering the range of the determination request, determine the remote index node in storage nodes according to the target cached node, wherein the remote index node is an index node in an index node layer of the storage nodes located above a leaf node layer.

9. A device for determining a remote index node, **characterized by** comprising: a memory, a processor, and a computer program stored in the memory and executable on the processor, wherein the computer program is configured to implement the method for determining the remote index node according to any one of claims 1 to 7.

10. A computer-readable storage medium, **characterized in that** a computer program is stored on the computer-readable storage medium, and when the computer program is executed by a processor, the method for determining the remote index node according to any one of claims 1 to 7 is implemented.
